(19) Europäisches Patentamt

European Patent Office

Office européen des brevets

(11) **EP 1 354 212 B1**

(12) **FASCICULE DE BREVET EUROPEEN**

(45) Date de publication et mention
de la délivrance du brevet:
**22.09.2004 Bulletin 2004/39**

(51) Int Cl.⁷: **G01P 13/02**, B64D 43/02

(21) Numéro de dépôt: **01996744.7**

(86) Numéro de dépôt international:
**PCT/FR2001/003605**

(22) Date de dépôt: **16.11.2001**

(87) Numéro de publication internationale:
**WO 2002/041008 (23.05.2002 Gazette 2002/21)**

(54) **PROCEDE DE DETERMINATION DE PARAMETRES AERODYNAMIQUES ET PROCEDE DE DETECTION DE PANNE D'UNE SONDE UTILISEE POUR DETERMINER LES PARAMETRES AERODYNAMIQUES**

VERFAHREN ZUR BESTIMMUNG AERODYNAMISCHER PARAMETER UND VERFAHREN ZUR ERKENNUNG EINES AUSFALLS EINER SONDE, DIE ZUR BESTIMMUNG AERODYNAMISCHER PARAMETER BENUTZT WIRD

METHOD FOR DETERMINING AERODYNAMIC PARAMETERS AND METHOD FOR DETECTING FAILURE OF A PROBE USED FOR DETERMINING AERODYNAMIC PARAMETERS

(84) Etats contractants désignés:
**DE FR GB**

(30) Priorité: **17.11.2000 FR 0014885**

(43) Date de publication de la demande:
**22.10.2003 Bulletin 2003/43**

(73) Titulaire: **Thales**
**75008 Paris (FR)**

(72) Inventeurs:
• **CHOISNET, Joèl, Thales Propriété Intellectuelle**
**F-94117 ArcueilCedex (FR)**

• **COLLOT, Lionel, Thales Propriété Intellectuelle**
**F-94117 Arcueil Cedex (FR)**
• **HANSON, Nicolas,**
**Thales Propriété Intellectuelle**
**F-94117 Arcueil Cedex (FR)**

(74) Mandataire: **Collet, Alain**
**THALES Intellectual Property**
**31-33 avenue Aristide Briand**
**94117 Arcueil Cedex (FR)**

(56) Documents cités:
**DE-A- 3 727 906**      **US-A- 5 616 861**

**Description**

L'invention se rapporte à un procédé de détermination de paramètres aérodynamiques et à un procédé de détection de panne d'une sonde utilisée pour déterminer les paramètres aérodynamiques de l'écoulement d'air entourant un aéronef.

Le pilotage de tout aéronef nécessite de connaître sa vitesse relative par rapport à l'air, c'est-à-dire au vent relatif. Cette vitesse est déterminée à l'aide de capteurs de la pression statique Ps, de la pression totale Pt, de l'angle d'incidence α et de l'angle de dérapage β. α et β fournissent la direction du vecteur de vitesse dans un système de référence, ou référentiel, lié à l'aéronef et (Pt - Ps) fournit le module de ce vecteur vitesse. Les quatre paramètres aérodynamiques permettent donc de déterminer le vecteur vitesse d'un avion et, accessoirement, d'un aéronef à rotor basculant dit convertible.

Le document US-A-5 616 861, par exemple, décrit un système consistant de plusieurs sondes de mesure de paramètres aérodynamiques et une méthode selon laquelle une corrélation entre l'incidence locale mesurée par chaque sonde et l'incidence α et le dérapage β de l'aéronef est établie à partir de mesures empiriques ou expérimentales.

Les différents capteurs de mesure de pression statique, de pression totale et d'incidence peuvent être regroupés dans une sonde dite multifonctions. Cette sonde peut être fixe comme celle décrite dans le brevet US-A-5,628,565 ou mobile comme celle décrite dans le brevet FR-A-2 665 539. Une telle sonde donne une mesure directe de la pression totale Pt. Par contre, elle ne permet pas de mesurer la pression statique Ps l'incidence α et le dérapage β de l'écoulement d'air à l'endroit où elle est située. En effet, l'écoulement est perturbé par la forme de l'aéronef. Pour déterminer la pression statique infini amont Ps ainsi que l'incidence α et le dérapage β de l'aéronef, il est nécessaire d'utiliser plusieurs sondes, en général deux, positionnées à des endroits précis de la peau de l'aéronef, par exemple de façon symétrique par rapport à un plan vertical de symétrie de l'aéronef. Ces deux sondes forment une voie de mesure.

De plus, pour sécuriser les mesures et s'affranchir de panne éventuelle d'une sonde, il est nécessaire de multiplier les voies de mesure. Par exemple avec trois voies de mesure, il est possible de constater un défaut sur une sonde lorsqu'une des voies donne un résultat différent des deux autres. On en déduit alors que la voie, dont le résultat diffère, est défectueuse. Néanmoins, à l'intérieur de cette voie, la sonde réellement en panne reste indéterminée.

L'invention a pour but de pallier ces différents défauts en proposant un procédé de détermination des paramètres aérodynamiques d'un écoulement d'air entourant un aéronef utilisant au moins deux sondes et permettant de s'affranchir de positions impératives pour l'emplacement des sondes.

Pour atteindre ce but, l'invention a pour objet un procédé de détermination de paramètres aérodynamiques d'un écoulement d'air entourant un aéronef, caractérisé en ce qu'à partir d'au moins deux sondes situées sur la peau de l'aéronef, chaque sonde comportant des moyens de mesure de l'incidence locale, le procédé consiste à déterminer l'incidence et le dérapage de l'aéronef, en fonction de l'incidence locale de chaque sonde et du champ aérodynamique de l'aéronef.

En utilisant un procédé de détermination des paramètres aérodynamiques conforme à l'invention, il est possible de réduire le nombre de sondes tout en conservant la même sécurité de mesure.

A cet effet, l'invention a également pour objet un procédé de détection de panne d'une sonde utilisée pour déterminer des paramètres aérodynamiques, d'un écoulement d'air entourant un aéronef, caractérisé en ce qu'à partir d'au moins trois sondes situées sur la peau de l'aéronef, chaque sonde comportant des moyens de mesure de l'incidence locale et des moyens de mesure de la pression statique locale, le procédé consiste à : soit :

- déterminer pour l'ensemble des groupes de deux sondes :

    - l'incidence et le dérapage en fonction des incidences locales et du champ aérodynamique de l'aéronef,
    - différentes valeurs du coefficient de pression de chaque sonde en fonction de l'incidence locale de chaque sonde et du champ aérodynamique de l'aéronef,
    - la pression statique infini amont en fonction du coefficient de pression et de la pression statique locale d'une même sonde et en fonction d'une mesure de la pression totale,

- comparer entre elles les valeurs de pression statique infini amont ainsi que les valeurs d'incidence ;
- identifier une panne éventuelle sur une sonde en évaluant des différences entre les valeurs de pression statique infini amont ainsi qu'entre les valeurs d'incidence.

ou soit :

- déterminer pour l'ensemble des groupes de deux sondes :

    - le dérapage en fonction des incidences locales et du champ aérodynamique de l'aéronef,
    - différentes valeurs du coefficient de pression de chaque sonde en fonction de l'incidence locale de chaque sonde et du champ aérodynamique de l'aéronef,
    - la pression statique infini amont en fonction du coefficient de pression et de la pression statique locale d'une même sonde et en fonction d'une mesure de la pression totale,

- comparer entre elles les valeurs de pression statique infini amont ainsi que les valeurs de dérapage.
- identifier une panne éventuelle sur une sonde en évaluant des différences entre les valeurs de pression statique infini amont ainsi qu'entre les valeurs de dérapage.

Avantageusement, pour plus de sécurité, il est possible de déterminer à la fois les valeurs d'incidence et les valeurs de dérapage puis de les comparer entre elles.

Grâce à ce procédé de détection de panne, on peut, avec trois sondes, tolérer une sonde défectueuse ou plus généralement avec N sondes, accepter N - 2 sondes défectueuses tout en déterminant les paramètres aérodynamiques.

L'invention sera mieux comprise et d'autres avantages apparaîtront à la lecture de la description détaillée d'un mode de réalisation de l'invention, description illustrée par le dessin joint dans lequel :

- la figure 1 représente un faisceau de courbes d'angle d'incidence constant et un autre faisceau de courbe d'angle de dérapage constant en fonction de l'angle d'incidence locale mesurée par deux sondes distinctes ;
- la figure 2 représente un autre faisceau de courbe d'angle d'incidence constant et d'angle de dérapage constant en fonction de l'angle d'incidence locale mesuré par une sonde et du coefficient de pression de cette même sonde ;
- la figure 3 représente dans un tableau, différentes valeurs de la pression statique infini amont déterminées à partir de trois sondes.

Pour tout aéronef, il est possible de déterminer son champ aérodynamique, c'est-à-dire qu'en tout point de la peau de l'aéronef, on détermine l'angle d'incidence locale $\alpha_{loc}$ du flux d'air en fonction de l'angle d'incidence $\alpha$ et à l'angle de dérapage $\beta$ de l'aéronef. On rappelle que l'angle d'incidence $\alpha$ est l'angle que fait le flux d'air entourant l'aéronef par rapport à un plan horizontal de l'aéronef et que l'angle de dérapage $\beta$ est l'angle que fait ce même flux d'air par rapport à un plan vertical de l'aéronef. Le plan vertical est, en général, un plan de symétrie de l'aéronef. Le champ aérodynamique peut, par exemple, être déterminé au moyen de la méthode de calcul élaborée par J. HESS et A. SMITH. Cette méthode a été publiée en 1967 sous le nom de « Calculation of potential flow about arbitrary bodies » (calcul d'un écoulement potentiel autour d'un corps quelconque) dans le volume 8 de la collection « Progress in aeronautical sciences » publiée aux Editions « Pergamon Press ».

En deux points distincts i et j situés sur la peau de l'aéronef, on effectue au moyen de deux sondes, chacune située en un des deux points i et j, une mesure de l'incidence locale. Les mesures réalisées aux points i et j seront désignées respectivement $\alpha_{loc\ i}$ et $\alpha_{loc\ j}$. Par commodité, on donnera, pour la suite de la description, la référence i pour la sonde située au point i, et j pour la sonde située au point j. Chaque mesure $\alpha_{loc\ i}$ et $\alpha_{loc\ j}$ varie en fonction de l'incidence $\alpha$ et du dérapage $\beta$. Ces fonctions peuvent s'écrire :

$$\alpha_{loc\ i} = f_i\ (\alpha,\ \beta)$$

$$\alpha_{loc\ j} = f_j(\alpha,\ \beta)$$

Les fonctions $f_i$ et $f_j$ sont données par le champ aérodynamique de l'aéronef. Ces deux équations forment un système à deux inconnues qu'il est possible de résoudre pour déterminer les valeurs de l'incidence $\alpha$ et du dérapage $\beta$.

Ce procédé permet de positionner les deux sondes i et j sensiblement n'importe où sur la peau de l'aéronef. On prendra néanmoins soin d'éviter quelques couples de points particuliers qui ne permettraient pas de résoudre le système d'équations. Un couple de points i et j, où les deux fonctions $f_i$ et $f_j$ seraient sensiblement égales, est par exemple à éviter. A titre d'illustration, ce procédé permet d'utiliser deux sondes situées du même côté de l'aéronef.

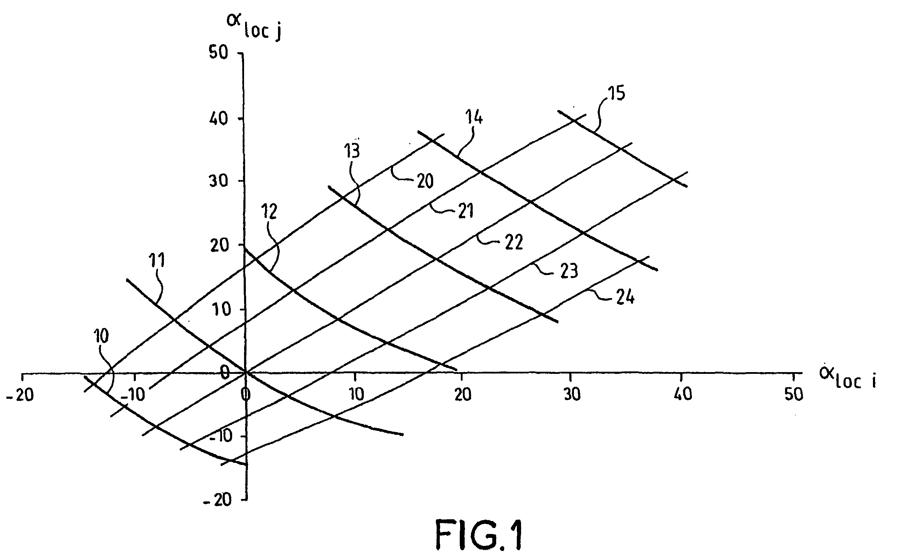

La figure 1 illustre à titre d'exemple une méthode de résolution graphique du système d'équation à deux inconnues. La figure 1 représente un repère orthogonal où sur l'axe des abscisses est portée la valeur de l'incidence locale $\alpha_{loc\ i}$ et où, sur l'axe des ordonnées, est portée la valeur de l'incidence locale $\alpha_{loc\ j}$. Dans ce repère un premier faisceau de courbes sensiblement parallèles représente des points où l'incidence $\alpha$ est constante. Sur la courbe 10, l'incidence $\alpha$ a une valeur constante de -5°. Sur la courbe 11, l'incidence $\alpha$ a une valeur constante de 0°. Sur la courbe 12, l'incidence $\alpha$ a une valeur constante de +5°. Sur la courbe 13, l'incidence $\alpha$ a une valeur constante de + 10°. Sur la courbe 14, l'incidence $\alpha$ a une valeur constante de + 15°. Sur la courbe 15, l'incidence $\alpha$ a une valeur constante de + 20°. Un second faisceau de courbes également sensiblement parallèles représente des points où le dérapage $\beta$ est constant. Sur la courbe 20, le dérapage $\beta$ a une valeur constante de -10°. Sur la courbe 21, le dérapage $\beta$ a une valeur constante de - 5°. Sur la courbe 22, le dérapage $\beta$ a une valeur constante de 0°. Sur la courbe 23, le dérapage $\beta$ a une valeur constante de + 5°. Sur la courbe 24, le dérapage $\beta$ a une valeur constante de + 10°.

Les deux faisceaux de courbes étant sécants, il est possible, à partir de la valeur de l'incidence locale $\alpha_{loc\ i}$ portée en abscisse et à partir de la valeur de l'incidence locale $\alpha_{loc\ j}$ portée en ordonnée, de déterminer la valeur de l'incidence α et celle du dérapage β de l'aéronef. On pourra déterminer les valeurs α et β par interpolation entre deux courbes voisines.

Les courbes 10 à 15 et 20 à 24 des deux faisceaux donnent des valeurs de α et β séparées de 5°. Cet écart de 5° n'est bien entendu donné qu'à titre d'exemple et il est possible d'augmenter la précision de détermination de α et β en ajoutant autant de courbes intermédiaires que nécessaire.

Il est par ailleurs possible d'utiliser des moyens informatiques pour résoudre le système d'équations par exemple en mémorisant les différentes courbes en fonction des mesures possibles de l'incidence locale $\alpha_{loc\,i}$ et $\alpha_{loc\,j}$.

Avantageusement, chaque sonde i et j comporte en outre des moyens de mesure de la pression statique locale respectivement $Ps_{loc\,i}$ et $Ps_{loc\,j}$. Ceci permet de déterminer la pression statique infini amont Ps de l'écoulement d'air entourant l'aéronef en fonction de l'incidence locale $\alpha_{loc\,i}$ et $\alpha_{loc\,j}$, de la pression statique locale $Ps_{loc\,i}$ et $Ps_{loc\,j}$ et du champ aérodynamique de l'aéronef. Pour déterminer la pression statique infini amont Ps, on peut déterminer un coefficient de pression $Kp_i$ ou $Kp_j$ d'une des deux sondes en fonction de l'incidence locale $\alpha_{loc\,i}$ et $\alpha_{loc\,j}$ et du champ aérodynamique de l'aéronef. La pression statique infini amont Ps se déduit du coefficient de pression $Kp_i$ ou $Kp_j$, de la pression statique locale $Ps_{loc\,i}$ ou $Ps_{loc\,j}$, selon le coefficient Kp choisi, et d'une mesure de la pression totale Pt de l'écoulement. Pour une sonde donnée, par exemple la sonde i, le coefficient de pression $Kp_i$ s'exprime de la façon suivante :

$$Kp_i = (Ps_{loc\,i} - Ps) / (Pt - Ps)$$

Avantageusement, une des sondes ou bien les deux, comporte des moyens de mesure de la pression totale Pt. Ces moyens comprennent par exemple un tube ouvert sensiblement face à l'écoulement et au fond duquel on mesure la pression. Ces moyens sont connus sous le nom de tube de Pitot.

L'expérience a montré que la mesure de la pression totale Pt est peu sensible à l'emplacement de la sonde sur la peau de l'aéronef portant les moyens de mesure de la pression totale Pt.

Plus précisément, pour une sonde donnée, par exemple celle située au point i, le coefficient de pression $Kp_i$, se détermine en fonction de l'incidence locale $\alpha_{loc\,i}$ et d'un des angles d'orientation α ou β de l'aéronef par rapport au flux d'air l'entourant.

$$Kp_i = f_\alpha (\alpha_{loc\,i}, \alpha)$$

ou

$$Kp_i = f_\beta (\alpha_{loc\,i}, \beta)$$

Les fonctions $f_\alpha$ et $f_\beta$ sont données par le champ aérodynamique de l'aéronef et il est donc aisé de déterminer le coefficient de pression $Kp_i$.

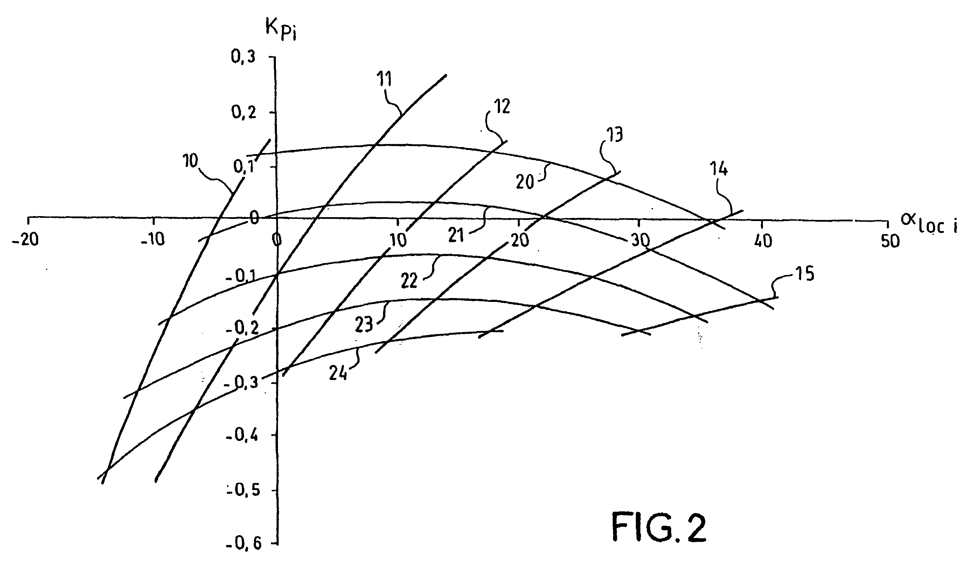

Comme précédemment, il est possible de déterminer graphiquement le coefficient de pression. La figure 2 représente un repère orthogonal où, sur l'axe des abscisses, est portée la valeur de l'incidence locale $\alpha_{loc\,i}$ et où, sur l'axe des ordonnées, est portée la valeur du coefficient de pression $Kp_i$. Dans ce repère, comme pour la figure 1, deux faisceaux de courbes représentent pour l'un des courbes d'égale incidence α, et pour l'autre, des courbes d'égal dérapage β. Pour plus de commodité, les courbes représentées figure 2 portent les mêmes repères que celles représentées figure 1 pour les mêmes valeurs d'incidence α ou de dérapage β.

Une fois le coefficient $Kp_i$ déterminé, il suffit d'utiliser la formule :

$$Kp_i = (Ps_{loc\,i} - Ps) / (Pt - Ps)$$

pour déterminer la pression statique infini amont Ps.

Le procédé de détermination des paramètres aérodynamiques décrit plus haut met en relation les valeurs d'incidence locale et pression statique locale mesurées par deux sondes distinctes. En utilisant au moins trois sondes et en mettant les valeurs mesurées par les sondes, en relation deux à deux, on peut localiser avec précision une éventuelle panne soit sur une mesure d'incidence locale, soit sur une mesure de pression, statique locale ou totale.

De façon générale, le procédé consiste à :

- déterminer pour l'ensemble des groupes de deux sondes :

  - l'incidence et le dérapage en fonction des incidences locales et du champ aérodynamique de l'aéronef,
  - différentes valeurs du coefficient de pression de chaque sonde en fonction de l'incidence locale de chaque sonde et du champ aérodynamique de l'aéronef,
  - la pression statique infini amont en fonction du coefficient de pression et de la pression statique locale d'une même sonde et en fonction d'une mesure de la pression totale,

- comparer entre elles les valeurs de pression statique infini amont, les valeurs d'incidence et/ou les valeurs de dérapage.

Le procédé de détection de panne sera mieux compris à partir d'un exemple comportant trois sondes i, j et k, situées en trois points distincts. Chacune de ces sondes mesure l'incidence locale, respectivement $\alpha_{loc\ i}$, $\alpha_{loc\ j}$ et $\alpha_{loc\ k}$, la pression statique locale $Ps_{loc\ i}$, $Ps_{loc\ j}$ et $Ps_{loc\ k}$, ainsi que la pression totale $Pt_i$, $Pt_j$ et $Pt_k$.

La mise en relation des sondes i et j permet de déterminer un angle d'incidence $\alpha_{ij}$ et un angle de dérapage $\beta_{ij}$. La mise en relation des sondes j et k permet de déterminer un angle d'incidence $\alpha_{jk}$ et un angle de dérapage $\beta_{jk}$. De même, la mise en relation des sondes i et k permet de déterminer un angle d'incidence $\alpha_{ik}$ et un angle de dérapage $\beta_{ik}$.

Chaque valeur calculée d'angle d'incidence $\alpha_{ij}$, $\alpha_{ik}$ et $\alpha_{jk}$ permet de déterminer trois valeurs de coefficients de pression Kp pour chacune des trois sondes, soit neuf valeurs de coefficient de pression pour l'ensemble des trois sondes. Ces neuf valeurs de Kp permettent de calculer neuf autres valeurs de pression statique infini amont. On détermine de la même façon neuf autres valeurs de coefficient de pression et neuf autres valeurs de pression statique infini amont à partir des valeurs d'angle de dérapage $\beta_{ij}$, $\beta_{ik}$ et $\beta_{jk}$. Le coefficient de pression de la sonde i, déterminé à partir de la valeur d'angle d'incidence $\alpha_{ij}$, sera noté $Kp_{i\alpha ij}$. Les autres valeurs de coefficients de pression et de pression statique infini amont seront notées de façon similaire en modifiant les indices.

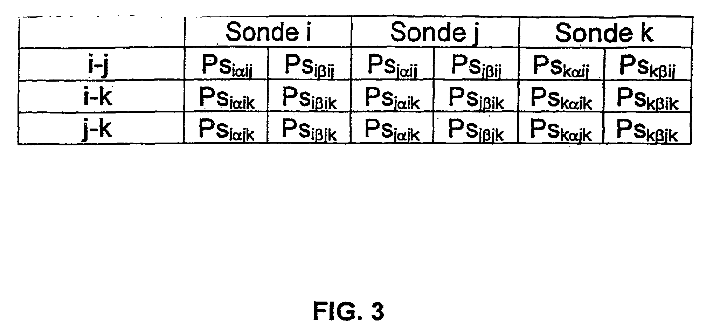

Le tableau figure 3 représente les 18 valeurs déterminées pour la pression statique infini amont. Dans ce tableau, trois doubles colonnes représentent chaque sonde pour laquelle on a déterminé une valeur du coefficient de pression.

La partie gauche de chaque double colonne comporte des valeurs de pression statique infini amont déterminées à partir d'une valeur d'angle d'incidence $\alpha$. La partie droite de chaque double colonne comporte des valeurs de pression statique infini amont déterminées à partir d'une valeur d'angle de dérapage $\beta$. Le tableau comporte trois lignes ayant chacune des valeurs de pression statique infini amont déterminées à partir de la mise en relation de deux sondes : mise en relation i-j, i-k et j-k.

A l'issue de la détermination des différentes valeurs de la pression statique infini amont, on compare ces valeurs entre elles. On compare également entre elles les valeurs d'incidence et/ou les valeurs de dérapage, ainsi que les valeurs de pression totale. Ces comparaisons permettent de localiser avec précision une éventuelle panne d'une sonde.

Pour mieux comprendre comment ces comparaisons vont nous renseigner sur une éventuelle panne, prenons l'exemple d'une panne dans la mesure de l'incidence locale de la sonde i, les mesures de pression statique locale et de pression totale étant correctes. La mise en relation de la sonde i avec les deux autres sondes j et k donne des valeurs d'incidence et de dérapage fausses. On a donc $\alpha_{ij}$ et $\alpha_{ik}$, respectivement $\beta_{ij}$ et $\beta_{ik}$, faux mais on a $\alpha_{jk}$, respectivement $\beta_{jk}$, correct. L'expérience a montré que

dans ce cas : $\alpha_{ij}$, $\alpha_{ik}$ et $\alpha_{jk}$, et respectivement $\beta_{ij}$, $\beta_{ik}$ et $\beta_{jk}$, sont distincts. Plus avant dans les déterminations, parmi les valeurs de pression statique infini amont, seules les valeurs de $Ps_{j\alpha jk}$, $Ps_{j\beta jk}$, $Ps_{k\alpha jk}$ et $Ps_{k\beta jk}$ sont correctes et donc sensiblement égales. Les 14 autres valeurs de pression statique infini amont sont fausses et l'expérience a montré que les valeurs fausses sont différentes. La comparaison permet en conséquence de déterminer le lieu de la panne. En effet, seule la mise en relation des sondes j et k et la détermination du coefficient de pression de ces deux sondes donnent des valeurs de pression statique infini amont sensiblement égales, ce qui permet d'identifier une panne sur la sonde i.

Considérons maintenant une panne dans l'un des moyens de mesure de la pression totale Pt. Cette panne est décelable par simple comparaison des valeurs $Pt_i$, $Pt_j$ et $Pt_k$ de pression totale mesurées par chaque sonde i, j et k. La sonde en panne au niveau de sa mesure de pression totale Pt est celle qui donne une mesure différente des autres sondes.

Enfin, considérons le cas d'une panne dans la mesure de la pression statique locale, par exemple de la sonde i. Les mesures d'incidences locales étant supposées correctes, la détermination de l'incidence $\alpha$ et du dérapage $\beta$ donne 3 couples de valeurs $\alpha_{ij}$, $\beta_{ij}$ ; $\alpha_{ik}$, $\beta_{ik}$ ; $\alpha_{jk}$, $\beta_{jk}$ sensiblement égaux. La localisation de la sonde en panne peut donc se faire en comparant les 18 valeurs, voir figure 3, de la pression statique infini amont obtenues. 6 des 18 valeurs calculées à partir de la pression statique locale fausse seront distinctes des 12 autres qui sont sensiblement égales. La sonde en panne est celle qui a mesuré la pression statique locale menant aux valeurs fausses de pression statique infini amont.

En résumé, la comparaison entre elles des valeurs d'incidence $\alpha$ ou des valeurs de dérapage $\beta$ permet de connaître l'existence d'une panne sur une mesure d'incidence locale. En effet, des mesures correctes d'incidence locale entraîneraient des valeurs sensiblement identiques pour $\alpha_{ij}$, $\alpha_{ik}$ et $\alpha_{jk}$ et de même pour $\beta_{ij}$, $\beta_{ik}$ et $\beta_{jk}$. La comparaison entre elles des valeurs de pression statique infini amont permet de localiser les moyens de mesure d'incidence locale défectueux. Plus précisément, une panne est identifiée sur un des moyens de mesure d'incidence locale $\alpha_{loc\ i}$, $\alpha_{loc\ j}$, $\alpha_{loc\ k}$ lorsque les valeurs d'incidence $\alpha_{ij}$, $\alpha_{ik}$, $\alpha_{jk}$ ou les valeurs de dérapage $\beta_{ij}$, $\beta_{ik}$, $\beta_{jk}$ ne sont pas sensiblement égales. La comparaison entre elles des valeurs de pression statique infini amont (de $Ps_{i\alpha ij}$ à $Ps_{k\beta jk}$) permet de localiser la sonde défectueuse.

La comparaison entre elles des mesures de pression totale permet de déterminer l'existence d'une panne dans une mesure de pression totale et de la localiser. Plus précisément, une panne est identifiée sur les moyens de mesure de la pression totale $Pt_i$, $Pt_j$ ou $Pt_k$ d'une sonde lorsque les valeurs mesurées de pression totale ne sont pas sensiblement égales. Les moyens défectueux de mesure de la pression totale sont localisés par une valeur de pression totale Pt$_i$, Pt$_j$ ou Pt$_k$ sensiblement différente des autres.

Si les valeurs de l'incidence, du dérapage et de la pression totale sont sensiblement égales, la comparaison des valeurs de pression statique permet de déterminer et de localiser une éventuelle panne parmi les moyens de mesure de pression statique locale. En l'occurrence, si la prise de pression statique locale de la sonde i est en panne, les six valeurs de double colonne, correspondant à la sonde i, représentée figure 3, seront différentes et les douze autres valeurs, correspondant aux sondes j et k, seront sensiblement égales. Plus précisément, une panne est identifiée sur les moyens de mesure de la pression statique locale Ps$_{loc\,i}$, Ps$_{loc\,j}$, Ps$_{loc\,k}$ lorsque les valeurs d'incidence $\alpha_{ij}$, $\alpha_{ik}$, $\alpha_{jk}$ sont sensiblement égales, les valeurs de dérapage $\beta_{ij}$, $\beta_{ik}$, $\beta_{jk}$ sont sensiblement égales, les valeurs de la pression totale P$_T$ sont sensiblement égales, et lorsque les valeurs de la pression statique infini amont (de Ps$_{i\alpha ij}$ à Ps$_{k\beta jk}$) ne sont pas sensiblement égales. Les moyens défectueux de mesure de la pression statique locale Ps$_{loc\,i}$, Ps$_{loc\,j}$, Ps$_{loc\,k}$ sont localisés par comparaison des valeurs de pression statique infini amont (de Ps$_{i\alpha ij}$ à Ps$_{k\beta jk}$).

Enfin, une panne est localisée sur les moyens de mesure de pression statique locale Ps$_{loc\,i}$ Ps$_{loc\,j}$, Ps$_{loc\,k}$ ou sur des moyens de mesure de la pression totale P$_T$ d'une sonde lorsque les valeurs de pression statique infini amont issues de cette sonde ne sont pas sensiblement égales alors que les valeurs d'incidence et de dérapage sont sensiblement égales. La comparaison entre les mesures de pression totale permet de localiser la panne sur un des moyens de mesure de la pression totale si ces mesures sont différentes. Dans le cas contraire, la panne est localisée sur un des moyens de mesure de la pression statique locale.

On note qu'il n'est pas nécessaire de déterminer à la fois les valeurs d'incidence $\alpha$ et les valeurs de dérapage $\beta$. A partir de trois sondes, i, j et k, la détermination de l'un de ces deux paramètres $\alpha$ ou $\beta$ suffit pour connaître l'existence d'une panne sur une mesure d'incidence locale. De plus, à partir de l'un seulement de ces deux paramètres, on peut déterminer 9 valeurs de pression statique infini amont et il suffit que deux d'entre eux, issus d'une même mise en relation de deux sondes, soient sensiblement égaux pour localiser une sonde défectueuse et pour connaître la valeur de pression statique infini amont à retenir. Néanmoins, le fait de déterminer à la fois les trois valeurs d'incidence $\alpha_{ij}$, $\alpha_{ik}$ et $\alpha_{jk}$ ainsi que les trois valeurs de dérapage $\beta_{ij}$, $\beta_{ik}$ et $\beta_{jk}$ permet d'améliorer la sécurité dans la détection de panne.

Par ailleurs, à partir de trois sondes, il est possible de mettre en évidence un défaut sur une des trois sondes. De même, avec quatre sondes, toujours en mettant en relation deux sondes entre elles deux à deux, il est possible de localiser des sondes distinctes en panne tout en effectuant des mesures correctes des différents paramètres aérodynamiques à l'aide des deux sondes restantes. De façon générale, le procédé de détection de panne peut être mis en oeuvre quel que soit le nombre N de sondes, au moins égal à trois, et permet de localiser N - 2 sondes défectueuses tout en effectuant des mesures correctes de l'incidence $\alpha$, du dérapage $\beta$, de la pression totale Pt et de la pression statique infini amont Ps.

**Revendications**

1. Procédé de détermination de paramètres aérodynamiques d'un écoulement d'air entourant un aéronef, **caractérisé en ce qu'**à partir d'au moins deux sondes situées sur la peau de l'aéronef, chaque sonde comportant des moyens de mesure de l'incidence locale ($\alpha_{loc\,i}$, $\alpha_{loc\,j}$), le procédé consiste à déterminer l'incidence ($\alpha$) et/ou le dérapage ($\beta$) de l'aéronef, en fonction de l'incidence locale de chaque sonde et du champ aérodynamique de l'aéronef.

2. Procédé selon la revendication 1, **caractérisé en ce que** chaque sonde comporte en outre des moyens de mesure de la pression statique locale (Ps$_{loci}$, Ps$_{locj}$) et **en ce que** le procédé consiste à déterminer la pression statique infini amont (Ps) de l'écoulement d'air entourant l'aéronef en fonction de l'incidence locale ($\alpha_{loc\,i}$, $\alpha_{loc\,j}$), de la pression totale (Pt), de la pression statique locale (Ps$_{loc\,i}$, Ps$_{locj}$) et du champ aérodynamique de l'aéronef.

3. Procédé selon la revendication 2, **caractérisé en ce qu'**il consiste à :

   - déterminer l'incidence ($\alpha$) et le dérapage ($\beta$) en fonction des incidences locales ($\alpha_{loc\,i}$, $\alpha_{loc\,j}$) mesurées, et du champ aérodynamique de l'aéronef
   - déterminer le coefficient de pression (K$_{pi}$, K$_{pj}$) de chaque sonde en fonction de l'incidence locale ($\alpha_{loc\,i}$, $\alpha_{loc\,j}$) de chaque sonde et du champ aérodynamique de l'aéronef
   - déterminer la pression statique infini amont (Ps) en fonction du coefficient de pression (Kp$_i$, Kp$_j$) et de la pression statique locale (Ps$_{loc\,i}$, Ps$_{loc\,j}$) d'une même sonde et en fonction de la pression totale (Pt),

   le coefficient de pression Kp$_i$ d'une sonde s'exprimant de la façon suivante :

$$Kp_i = (Ps_{loc\,i} - Ps) / (Pt - Ps),$$

   avec Ps$_{loc\,i}$ qui représente la pression statique locale de la sonde considérée,

Ps qui représente la pression statique infini amont, et Pt qui représente la pression totale.

4. Procédé selon la revendication 3, **caractérisé en ce qu'**on détermine un faisceau de courbes (10 à 15) d'angle d'incidence ($\alpha$) constante et un faisceau de courbes (20 à 24) d'angle de dérapage ($\beta$) constant en fonction des incidences locales ($\alpha_{loc\,i}$, $\alpha_{loc\,j}$) à partir du champ aérodynamique.

5. Procédé selon l'une quelconque des revendications 3 ou 4, **caractérisé en ce qu'**on détermine un faisceau de courbes (10 à 15) d'angle d'incidence ($\alpha$) constante et un faisceau de courbes (20 à 24) d'angle de dérapage ($\beta$) constant en fonction de l'incidence locale ($\alpha_{loc\,i}$, $\alpha_{loc\,j}$) d'une sonde (i, j) et du coefficient de pression ($Kp_i$, $Kp_j$) de cette même sonde à partir du champ aérodynamique.

6. Procédé de détection de panne d'une sonde utilisée pour déterminer des paramètres aérodynamiques, d'un écoulement d'air entourant un aéronef, **caractérisé en ce qu'**à partir d'au moins trois sondes situées sur la peau de l'aéronef, chaque sonde comportant des moyens de mesure de l'incidence locale ($\alpha_{loc\,i}$, $\alpha_{loc\,j}$, $\alpha_{loc\,k}$) et des moyens de mesure de la pression statique locale ($Ps_{loc\,i}$, $Ps_{loc\,j}$, $Ps_{loc\,k}$), le procédé consiste à :

   • déterminer pour l'ensemble des groupes de deux sondes :

      - l'incidence ($\alpha_{ij}$, $\alpha_{ik}$, $\alpha_{jk}$) en fonction des incidences locales ($\alpha_{loc\,i}$, $\alpha_{loc\,j}$, $\alpha_{loc\,k}$) et du champ aérodynamique de l'aéronef,
      - différentes valeurs du coefficient de pression (de $Kp_{i\alpha ij}$ à $Kp_{k\alpha jk}$) de chaque sonde (i, j, k) en fonction de l'incidence locale ($\alpha_{loc\,i}$, $\alpha_{loc\,j}$, $\alpha_{loc\,k}$) de chaque sonde et du champ aérodynamique de l'aéronef,
      - la pression statique infini amont (de $Ps_{i\alpha ij}$ à $Ps_{k\alpha jk}$) en fonction du coefficient de pression (de $Kp_{i\alpha ij}$ à $Kp_{k\alpha jk}$) et de la pression statique locale ($Ps_{loc\,i}$, $Ps_{loc\,j}$, $Ps_{loc\,k}$) d'une même sonde (i, j, k) et en fonction d'une mesure de la pression totale (Pt),

   • comparer entre elles les valeurs de pression statique infini amont ainsi que les valeurs d'incidence ($\alpha_{ij}$, $\alpha_{ik}$, $\alpha_{jk}$),
   • identifier une panne éventuelle sur une sonde en évaluant des différences entre les valeurs de pression statique infini amont
   • identifier une panne éventuelle sur une sonde en évaluant des différences entre les valeurs de pression statique infini amont (de $Ps_{i\alpha ij}$ à $Ps_{k\alpha jk}$) ainsi qu'entre les valeurs d'incidence ($\alpha_{ij}$, $\alpha_{ik}$, $\alpha_{jk}$) ;

le coefficient de pression $Kp_i$ d'une sonde s'exprimant de la façon suivante :

$$Kp_i = (Ps_{loc\,i} - Ps) / (Pt - Ps),$$

avec $Ps_{loc\,i}$ qui représente la pression statique locale de la sonde considérée, Ps qui représente la pression statique infini amont, et Pt qui représente la pression totale.

7. Procédé de détection de panne d'une sonde utilisée pour déterminer des paramètres aérodynamiques, d'un écoulement d'air entourant un aéronef, **caractérisé en ce qu'**à partir d'au moins trois sondes situées sur la peau de l'aéronef, chaque sonde comportant des moyens de mesure de l'incidence locale ($\alpha_{loc\,i}$, $\alpha_{loc\,j}$, $\alpha_{loc\,k}$) et des moyens de mesure de la pression statique locale ($Ps_{loc\,i}$, $Ps_{loc\,j}$, $Ps_{loc\,k}$), le procédé consiste à :

   • déterminer pour l'ensemble des groupes de deux sondes :

      - le dérapage ($\beta_{ij}$, $\beta_{ik}$, $\beta_{jk}$) en fonction des incidences locales ($\alpha_{loc\,i}$, $\alpha_{loc\,j}$, $\alpha_{loc\,k}$) et du champ aérodynamique de l'aéronef,
      - différentes valeurs du coefficient de pression (de $Kp_{i\beta ij}$ à $Kp_{k\beta jk}$) de chaque sonde (i, j, k) en fonction de l'incidence locale ($\alpha_{loc\,i}$, $\alpha_{loc\,j}$, $\alpha_{loc\,k}$) de chaque sonde et du champ aérodynamique de l'aéronef,
      - la pression statique infini amont (de $Ps_{i\beta ij}$ à $Ps_{k\beta jk}$) en fonction du coefficient de pression (de $Kp_{i\beta ij}$ à $Kp_{k\beta jk}$) et de la pression statique locale ($Ps_{loc\,i}$, $Ps_{loc\,j}$, $Ps_{loc\,k}$) d'une même sonde (i, j, k) et en fonction d'une mesure de la pression totale (Pt),

   • comparer entre elles les valeurs de pression statique infini amont ainsi que les valeurs de dérapage ($\beta_{ij}$, $\beta_{ik}$, $\beta_{jk}$),
   • identifier une panne éventuelle sur une sonde en évaluant des différences entre les valeurs de pression statique infini amont (de $Ps_{i\alpha ij}$ à $Ps_{k\alpha jk}$) ainsi qu'entre les valeurs de dérapage ($\beta_{ij}$, $\beta_{ik}$, $\beta_{jk}$) ;

le coefficient de pression $Kp_i$ d'une sonde s'exprimant de la façon suivante :

$$Kp_i = (Ps_{loc\,i} - Ps) / (Pt - Ps),$$

avec $Ps_{loc\,i}$ qui représente la pression statique locale de la sonde considérée, Ps qui représente la pression statique infini amont, et Pt qui représente la pression totale.

**8.** Procédé selon l'une quelconque des revendications 6 ou 7, **caractérisé en ce qu'**une panne est détectée sur des moyens de mesure d'incidence locale ($\alpha_{loc\,i}$, $\alpha_{loc\,j}$, $\alpha_{loc\,k}$) lorsque les valeurs d'incidence ($\alpha_{ij}$, $\alpha_{ik}$, $\alpha_{jk}$) ou les valeurs de dérapage ($\beta_{ij}$, $\beta_{ik}$, $\beta_{jk}$) ne sont pas sensiblement égales.

**9.** Procédé selon l'une des revendications précédentes, **caractérisé en ce qu'**au moins une sonde comporte des moyens de mesure de la pression totale ($Pt_i$, $Pt_j$, $Pt_k$).

**10.** Procédé selon l'une quelconque des revendications 6 à 8, **caractérisé en ce qu'**une panne est identifiée sur un des moyens de mesure d'incidence locale ($\alpha_{loc\,i}$, $\alpha_{loc\,j}$, $\alpha_{loc\,k}$) lorsque les valeurs d'incidence ($\alpha_{ij}$, $\alpha_{ik}$, $\alpha_{jk}$) ou des valeurs de dérapage ($\beta_{ij}$, $\beta_{ik}$, $\beta_{jk}$) ne sont pas sensiblement égales, et **en ce que** la comparaison entre elles des valeurs de pression statique infini amont (de $Ps_{i\alpha ij}$ à $Ps_{k\alpha jk}$ ; de $Ps_{i\beta ij}$ à $Ps_{k\beta jk}$) permet de localiser la sonde défectueuse.

**11.** Procédé selon l'une quelconque des revendications 6 à 8 et selon la revendication 9 en tant que revendication dépendante d'une des revendications 6 à 8, **caractérisé en ce qu'**une panne est identifiée sur les moyens de mesure de la pression totale ($Pt_i$, $Pt_j$, $Pt_k$) d'une sonde lorsque les valeurs mesurées de pression totale ne sont pas sensiblement égales, **en ce que** les moyens défectueux de mesure de la pression totale ($P_T$) sont localisés par une valeur de pression totale ($Pt_i$, $Pt_j$, $Pt_k$) sensiblement différente des autres.

**12.** Procédé selon l'une quelconque des revendications 6 à 8 et selon la revendication 9 en tant que revendication dépendante d'une des revendications 6 à 8, **caractérisé en ce qu'**une panne est identifiée sur les moyens de mesure de la pression statique locale ($Ps_{loc\,i}$, $Ps_{loc\,j}$, $Ps_{loc\,k}$) lorsque les valeurs d'incidence ($\alpha_{ij}$, $\alpha_{ik}$, $\alpha_{jk}$) sont sensiblement égales, les valeurs de dérapage ($\beta_{ij}$, $\beta_{ik}$, $\beta_{jk}$) sont sensiblement égales, les valeurs de la pression totale ($Pt_i$, $Pt_j$, $Pt_k$) sont sensiblement égales, et lorsque les valeurs de la pression statique infini amont (de $Ps_{i\alpha ij}$ à $Ps_{k\alpha jk}$ ; $Ps_{i\beta ij}$ à $Ps_{k\beta jk}$) ne sont pas sensiblement égales, **en ce que** les moyens défectueux de mesure de la pression statique locale ($Ps_{loc\,i}$, $Ps_{loc\,j}$, $Ps_{loc\,k}$) sont localisés par comparaison des valeurs de pression statique infini amont (de $Ps_{i\alpha ij}$ à $Ps_{k\alpha jk}$ ; de $Ps_{i\beta ij}$ à $Ps_{k\beta jk}$).

### Patentansprüche

**1.** Verfahren zur Bestimmung aerodynamischer Parameter einer ein Luftfahrzeug umgebenden Luftströmung, **dadurch gekennzeichnet, dass** ausgehend von mindestens zwei Sonden, die auf der Haut des Luftfahrzeugs angeordnet sind, wobei jede Sonde Mittel zur Messung des lokalen Anstellwinkels ($\alpha_{loc\,i}$, $\alpha_{loc\,j}$) aufweist, das Verfahren darin besteht, den Anstellwinkel ($\alpha$) und/oder den Schiebewinkel ($\beta$) des Luftfahrzeugs in Abhängigkeit vom lokalen Anstellwinkel jeder Sonde und dem aerodynamischen Feld des Luftfahrzeugs zu bestimmen.

**2.** Verfahren nach Anspruch 1, **dadurch gekennzeichnet, dass** jede Sonde außerdem Mittel zum Messen des lokalen statischen Drucks ($Ps_{loc\,i}$, $Ps_{loc\,j}$) aufweist, und das Verfahren darin besteht, den statischen Druck der unendlichen Aufwärtsströmung ($Ps$) der das Luftfahrzeug umgebenden Luftströmung in Abhängigkeit vom lokalen Anstellwinkel ($\alpha_{loc\,i}$, $\alpha_{loc\,j}$), vom Gesamtdruck ($Pt$), vom lokalen statischen Druck ($Ps_{loc\,i}$, $Ps_{loc\,j}$) und vom aerodynamischen Feld des Luftfahrzeugs zu bestimmen.

**3.** Verfahren nach Anspruch 2, **dadurch gekennzeichnet, dass** es darin besteht:

- den Anstellwinkel ($\alpha$) und den Schiebewinkel ($\beta$) in Abhängigkeit von den gemessenen lokalen Anstellwinkeln ($\alpha_{loc\,i}$, $\alpha_{loc\,j}$) und vom aerodynamischen Feld des Luftfahrzeugs zu bestimmen,
- den Druckkoeffizienten ($Kp_i$, $Kp_j$) jeder Sonde in Abhängigkeit vom lokalen Anstellwinkel ($\alpha_{loc\,i}$, $\alpha_{loc\,j}$) jeder Sonde und vom aerodynamischen Feld des Luftfahrzeugs zu bestimmen,
- den statischen Druck der unendlichen Aufwärtsströmung ($Ps$) in Abhängigkeit vom Druckkoeffizienten ($Kp_i$, $Kp_j$) und vom lokalen statischen Druck ($Ps_{loc\,i}$, $Ps_{loc\,j}$) der gleichen Sonde und in Abhängigkeit vom Gesamtdruck ($Pt$) zu bestimmen,

wobei der Druckkoeffizient $Kp_i$ einer Sonde folgendermaßen ausgedrückt wird:

$$Kp_i = (Ps_{loc\,i} - Ps)/(Pt - Ps),$$

wobei $Ps_{loc\,i}$ den lokalen statischen Druck der betroffenen Sonde,
Ps den statischen Druck der unendlichen Aufwärtsströmung, und
Pt den Gesamtdruck darstellt.

**4.** Verfahren nach Anspruch 3, **dadurch gekennzeichnet, dass** ein Kurvenbündel (10 bis 15) mit einem konstanten Anstellwinkel ($\alpha$) und ein Kurvenbündel (20 bis 24) mit einem konstanten Schiebewinkel ($\beta$) in Abhängigkeit von den lokalen Anstellwinkeln ($\alpha_{loc\,i}$, $\alpha_{loc\,j}$) ausgehend vom aerodynamischen Feld bestimmt werden.

**5.** Verfahren nach einem der Ansprüche 3 oder 4, **dadurch gekennzeichnet, dass** ein Kurvenbündel (10 bis 15) mit einem konstanten Anstellwinkel ($\alpha$) und ein Kurvenbündel (20 bis 24) mit einem konstanten Schiebewinkel ($\beta$) in Abhängigkeit vom lokalen Anstellwinkel ($\alpha_{loc\,i}$, $\alpha_{loc\,j}$) einer Sonde (i, j) und vom Druckkoeffizienten ($Kp_i$, $Kp_j$) der gleichen Sonde ausgehend vom aerodynamischen Feld bestimmt werden.

**6.** Verfahren zum Erfassen eines Ausfalls einer Sonde, die zur Bestimmung aerodynamischer Parameter einer ein Luftfahrzeug umgebenden Luftströmung verwendet wird, **dadurch gekennzeichnet, dass** ausgehend von mindestens drei Sonden, die sich auf der Haut des Luftfahrzeugs befinden, wobei jede Sonde Mittel zur Messung des lokalen Anstellwinkels ($\alpha_{loc\,i}$, $\alpha_{loc\,j}$, $\alpha_{loc\,k}$) und Mittel zur Messung des lokalen statischen Drucks ($Ps_{loc\,i}$, $Ps_{loc\,j}$, $Ps_{loc\,k}$) aufweist, das Verfahren darin besteht:

- für die Gesamtheit der Gruppen von zwei Sonden zu bestimmen:

  - den Anstellwinkel ($\alpha_{ij}$, $\alpha_{ik}$, $\alpha_{jk}$) in Abhängigkeit von den lokalen Anstellwinkeln ($\alpha_{loc\,i}$, $\alpha_{loc\,j}$, $\alpha_{loc\,k}$) und vom aerodynamischen Feld des Luftfahrzeugs,
  - verschiedene Werte des Druckkoeffizienten (von $Kp_{i\alpha ij}$ bis $Kp_{k\alpha jk}$) jeder Sonde (i, j, k) in Abhängigkeit vom lokalen Anstellwinkel ($\alpha_{loc\,i}$, $\alpha_{loc\,j}$, $\alpha_{loc\,k}$) jeder Sonde und vom aerodynamischen Feld des Luftfahrzeugs,
  - den statischen Druck der unendlichen Aufwärtsströmung (von $Ps_{i\alpha ij}$ bis $Ps_{k\alpha jk}$) in Abhängigkeit vom Druckkoeffizienten (von $Kp_{i\alpha ij}$ bis $Kp_{k\alpha jk}$) und vom lokalen statischen Druck $Ps_{loc\,i}$, $Ps_{loc\,j}$, $Ps_{loc\,k}$) der gleichen Sonde (i, j, k) und in Abhängigkeit von einer Messung des Gesamtdrucks (Pt),

- die Werte des statischen Drucks der unendlichen Aufwärtsströmung sowie die Werte der Anstellwinkel ($\alpha_{ij}$, $\alpha_{ik}$, $\alpha_{jk}$) miteinander zu vergleichen,
- einen möglichen Ausfall einer Sonde zu identifizieren, indem Unterschiede zwischen den Werten des statischen Drucks der unendlichen Aufwärtsströmung (von $Ps_{i\alpha ij}$ bis $Ps_{k\alpha jk}$) sowie zwischen den Werten der Anstellwinkel ($\alpha_{ij}$, $\alpha_{ik}$, $\alpha_{jk}$) ausgewertet werden,

wobei der Druckkoeffizient $Kp_i$ einer Sonde folgendermaßen ausgedrückt wird:

$$Kp_i = (Ps_{loc\,i} - Ps) / (Pt - Ps),$$

wobei $Ps_{loc\,i}$ den lokalen statischen Druck der betroffenen Sonde,
Ps den statischen Druck der unendlichen Aufwärtsströmung, und
Pt den Gesamtdruck darstellt.

**7.** Verfahren zum Erfassen eines Ausfalls einer Sonde, die zur Bestimmung aerodynamischer Parameter einer ein Luftfahrzeug umgebenden Luftströmung verwendet wird, **dadurch gekennzeichnet, dass** ausgehend von mindestens drei Sonden, die sich auf der Haut des Luftfahrzeugs befinden, wobei jede Sonde Mittel zur Messung des lokalen Anstellwinkels ($\alpha_{loc\,i}$, $\alpha_{loc\,j}$, $\alpha_{loc\,k}$) und Mittel zur Messung des lokalen statischen Drucks ($Ps_{loc\,i}$, $Ps_{loc\,j}$, $Ps_{loc\,k}$) aufweist, das Verfahren darin besteht:

- für die Gesamtheit der Gruppen von zwei Sonden zu bestimmen:

  - den Schiebewinkel ($\beta_{ij}$, $\beta_{ik}$, $\beta_{jk}$) in Abhängigkeit von den lokalen Anstellwinkeln ($\alpha_{loc\,i}$, $\alpha_{loc\,j}$, $\alpha_{loc\,k}$) und vom aerodynamischen Feld des Luftfahrzeugs,
  - verschiedene Werte des Druckkoeffizienten (von $Kp_{i\beta ij}$ bis $Kp_{k\beta jk}$) jeder Sonde (i, j, k) in Abhängigkeit vom lokalen Anstellwinkel ($\alpha_{loc\,i}$, $\alpha_{loc\,j}$, $\alpha_{loc\,k}$) jeder Sonde und vom aerodynamischen Feld des Luftfahrzeugs,
  - den statischen Druck der unendlichen Aufwärtsströmung (von $Ps_{i\beta ij}$ bis $Ps_{k\beta jk}$) in Abhängigkeit vom Druckkoeffizienten (von $Kp_{i\beta ij}$ bis $Kp_{k\beta jk}$) und vom lokalen statischen Druck ($Ps_{loc\,i}$, $Ps_{loc\,j}$, $Ps_{loc\,k}$) der gleichen Sonde (i, j, k) und in Abhängigkeit von einer Messung des Gesamtdrucks (Pt),

- die Werte des statischen Drucks der unendlichen Aufwärtsströmung sowie die Werte des Schiebewinkels ($\beta_{ij}$, $\beta_{ik}$, $\beta_{jk}$) miteinander zu vergleichen,
- einen möglichen Ausfall einer Sonde zu identifizieren, indem Unterschiede zwischen den Werten des statischen Drucks der unendlichen Aufwärtsströmung (von $Ps_{i\alpha ij}$ bis $Ps_{k\alpha jk}$) sowie zwischen den Werten der Schiebewinkel ($\beta_{ij}$, $\beta_{ik}$, $\beta_{jk}$) ausgewertet werden,

wobei der Druckkoeffizient $Kp_i$ einer Sonde folgendermaßen ausgedrückt wird:

$$Kp_i = (Ps_{loc\,i} - Ps)/(Pt - Ps),$$

wobei $Ps_{loc\,i}$ den lokalen statischen Druck der betroffenen Sonde,

Ps den statischen Druck der unendlichen Aufwärtsströmung, und

Pt den Gesamtdruck darstellt.

8. Verfahren nach einem der Ansprüche 6 oder 7, **dadurch gekennzeichnet, dass** ein Ausfall in den Mitteln zur Messung des lokalen Anstellwinkels $(\alpha_{loc\,i}, \alpha_{loc\,j}, \alpha_{loc\,k})$ erfasst wird, wenn die Werte der Anstellwinkel $(\alpha_{ij}, \alpha_{ik}, \alpha_{jk})$ oder die Werte der Schiebewinkel $(\beta_{ij}, \beta_{ik}, \beta_{jk})$ nicht im Wesentlichen gleich sind.

9. Verfahren nach einem der vorhergehenden Ansprüche, **dadurch gekennzeichnet, dass** mindestens eine Sonde Mittel zum Messen des Gesamtdrucks $(Pt_i, Pt_j, Pt_k)$ aufweist.

10. Verfahren nach einem der Ansprüche 6 bis 8, **dadurch gekennzeichnet, dass** ein Ausfall in einem der Mittel zum Messen des lokalen Anstellwinkels $(\alpha_{loc\,i}, \alpha_{loc\,j}, \alpha_{loc\,k})$ identifiziert wird, wenn die Werte der Anstellwinkel $(\alpha_{ij}, \alpha_{ik}, \alpha_{jk})$ oder die Werte der Schiebewinkel $(\beta_{ij}, \beta_{ik}, \beta_{jk})$ nicht im Wesentlichen gleich sind, und dass der Vergleich der Werte des statischen Drucks der unendlichen Aufwärtsströmung (von $Ps_{i\alpha ij}$ bis $Ps_{k\alpha jk}$; von $Ps_{i\beta ij}$ bis $Ps_{k\beta jk}$) miteinander die Lokalisierung der fehlerhaften Sonde ermöglicht.

11. Verfahren nach einem der Ansprüche 6 bis 8 und nach Anspruch 9 in Abhängigkeit von einem der Ansprüche 6 bis 8, **dadurch gekennzeichnet, dass** ein Ausfall in den Mitteln zur Messung des Gesamtdrucks $(Pt_i, Pt_j, Pt_k)$ einer Sonde identifiziert wird, wenn die gemessenen Werte des Gesamtdrucks nicht im Wesentlichen gleich sind, dass die fehlerhaften Mittel zur Messung des Gesamtdrucks $(P_T)$ durch einen Wert des Gesamtdrucks $(Pt_i, Pt_j, Pt_k)$ lokalisiert werden, der sich wesentlich von den anderen unterscheidet.

12. Verfahren nach einem der Ansprüche 6 bis 8 und nach Anspruch 9 in Abhängigkeit von einem der Ansprüche 6 bis 8, **dadurch gekennzeichnet, dass** ein Ausfall in den Mitteln zur Messung des lokalen statischen Drucks $(Ps_{loc\,i}, Ps_{loc\,j}, Ps_{loc\,k})$ identifiziert wird, wenn die Werte der Anstellwinkel $(\alpha_{ij}, \alpha_{ik}, \alpha_{jk})$ im Wesentlichen gleich sind, die Werte der Schiebewinkel $(\beta_{ij}, \beta_{ik}, \beta_{jk})$ im Wesentlichen gleich sind, die Werte des Gesamtdrucks $(Pt_i, Pt_j, Pt_k)$ im Wesentlichen gleich sind, und wenn die Werte des statischen Drucks der unendlichen Aufwärtsströmung (von $Ps_{i\alpha ij}$ bis $Ps_{k\alpha jk}$; von $Ps_{i\beta ij}$ bis $Ps_{k\beta jk}$) nicht im Wesentlichen gleich sind, dass die fehlerhaften Mittel zur Messung des lokalen statischen Drucks $(Ps_{loc\,i}, Ps_{loc\,j}, Ps_{loc\,k})$ durch Vergleich der Werte des statischen Drucks der unendlichen Aufwärtsströmung (von $Ps_{i\alpha ij}$ bis $Ps_{k\alpha jk}$; von $Ps_{i\beta ij}$ bis $Ps_{k\beta jk}$) lokalisiert werden.

**Claims**

1. Process for determining aerodynamic parameters of an airflow surrounding an aircraft, **characterized in that** on the basis of at least two probes situated on the skin of the aircraft, each probe comprising means for measuring the local angle of attack $(\alpha_{loc\,i}, \alpha_{loc\,j})$, the process consists in determining the angle of attack $(\alpha)$ and/or sideslip $(\beta)$ of the aircraft, as a function of the local angle of attack of each probe and of the aerodynamic field of the aircraft.

2. Process according to Claim 1, **characterized in that** each probe furthermore comprises means for measuring the local static pressure $(Ps_{loci}, Ps_{locj})$ and **in that** the process consists in determining the upstream infinity static pressure (Ps) of the airflow surrounding the aircraft as a function of the local angle of attack $(\alpha_{loc\,i}, \alpha_{loc\,j})$, of the total pressure (Pt), of the local static pressure $(Ps_{loc\,i}, Ps_{locj})$ and of the aerodynamic field of the aircraft.

3. Process according to Claim 2, **characterized in that** it consists in:

 - determining the angle of attack $(\alpha)$ and sideslip $(\beta)$ as a function of the measured local angles of attack $(\alpha_{loc\,i}, \alpha_{loc\,j})$, and of the aerodynamic field of the aircraft
 - determining the pressure coefficient $(K_{pi}, K_{pj})$ of each probe as a function of the local angle of attack $(\alpha_{loc\,i}, \alpha_{loc\,j})$ of each probe and of the aerodynamic field of the aircraft
 - determining the upstream infinity static pressure (Ps) as a function of the pressure coefficient $(Kp_i, Kp_j)$ and of the local static pressure $(Ps_{loc\,i}, Ps_{loc\,j})$ of one and the same probe and as a function of the total pressure (Pt).

4. Process according to Claim 3, **characterized in that** a net of curves (10 to 15) of constant angle of attack $(\alpha)$ and a net of curves (20 to 24) of constant angle of sideslip $(\beta)$ are determined as a function of the local angles of attack $(\alpha_{loc\,i}, \alpha_{loc\,j})$ on the basis of the aerodynamic field.

5. Process according to either of Claims 3 and 4, **characterized in that** a net of curves (10 to 15) of constant angle of attack $(\alpha)$ and a net of curves (20 to 24) of constant angle of sideslip $(\beta)$ are determined as a function of the local angle of attack $(\alpha_{loc\,i}, \alpha_{loc\,j})$ of a probe (i, j) and of the pressure coefficient $(Kp_i, Kp_j)$ of this same probe on the basis of the aerodynamic field.

6. Process for detecting a fault with a probe used to determine aerodynamic parameters, of an airflow surrounding an aircraft, **characterized in that** on the basis of at least three probes situated on the skin of the aircraft, each probe comprising means for measuring the local angle of attack ($\alpha_{loc\,i}$, $\alpha_{loc\,j}$) and means for measuring the local static pressure ($Ps_{loc\,i}$, $Ps_{loc\,j}$, $Ps_{loc\,k}$), the process consists in:

   • determining for all the groups of two probes:

      - the angle of attack ($\alpha_{ij}$, $\alpha_{ik}$, $\alpha_{jk}$) as a function of the local angles of attack ($\alpha_{loc\,i}$, $\alpha_{loc\,j}$, $\alpha_{loc\,k}$) and of the aerodynamic field of the aircraft,
      - various values of the pressure coefficient (from $Kp_{i\alpha ij}$ to $Kp_{k\alpha jk}$) of each probe (i, j, k) as a function of the local angle of attack ($\alpha_{loc\,i}$, $\alpha_{loc\,j}$, $\alpha_{loc\,k}$) of each probe and of the aerodynamic field of the aircraft,
      - the upstream infinity static pressure (from $Ps_{i\alpha ij}$ to $Ps_{k\alpha jk}$) as a function of the pressure coefficient (from $Kp_{i\alpha ij}$ to $Kp_{k\alpha jk}$) and of the local static pressure ($Ps_{loc\,i}$, $Ps_{loc\,j}$, $Ps_{loc\,k}$) of one and the same probe (i, j, k) and as a function of a measurement of the total pressure (Pt),

   • intercomparing the values of upstream infinity static pressure as well as the angle of attack values ($\alpha_{ij}$, $\alpha_{ik}$, $\alpha_{jk}$)
   • identifying a possible fault with a probe by evaluating differences between the values of upstream infinity static pressure (from $Ps_{i\alpha ij}$ to $Ps_{k\alpha jk}$) as well as between the values of angle of attack ($\alpha_{ij}$, $\alpha_{jik}$, $\alpha_{jk}$);

   the pressure coefficient $Kp_i$ of a probe being expressed as follows:

   $$Kp_i = (Ps_{loc\,i} - Ps)/(Pt - Ps),$$

   with $Ps_{loc\,i}$ which represents the local static pressure of the relevant probe,
   Ps which represents the upstream infinity static pressure,
   and Pt which represents the total pressure.

7. Process for detecting a fault with a probe used to determine aerodynamic parameters, of an airflow surrounding an aircraft, **characterized in that** on the basis of at least three probes situated on the skin of the aircraft, each probe comprising means for measuring the local angle of attack ($\alpha_{loc\,i}$, $\alpha_{loc\,j}$, $\alpha_{loc\,j}$) and means for measuring the local static pressure ($Ps_{ioc\,i}$, $Ps_{loc\,j}$, $Ps_{loc\,k}$), the process consists in:

   • determining for all the groups of two probes:

      - the angle of sideslip ($\beta_{ij}$, $\beta_{ik}$, $\beta_{jk}$) as a function of the local angles of attack ($\alpha_{loc\,i}$, $\alpha_{loc\,j}$, $\alpha_{loc\,k}$) and of the aerodynamic field of the aircraft,
      - various values of the pressure coefficient (from $Kp_{i\beta ij}$ to $Kp_{k\beta jk}$) of each probe (i, j, k) as a function of the local angle of attack ($\alpha_{loc\,i}$, $\alpha_{loc\,j}$, $\alpha_{loc\,k}$) of each probe and of the aerodynamic field of the aircraft,
      - the upstream infinity static pressure (from $Ps_{i\beta ij}$ to $Ps_{k\beta jk}$) as a function of the pressure coefficient (from $Kp_{i\beta ij}$ to $Kp_{k\beta jk}$) and of the local static pressure ($Ps_{loc\,i}$, $Ps_{loc\,j}$, $Ps_{loc\,k}$) of one and the same probe (i, j, k) and as a function of a measurement of the total pressure (Pt),

   • intercomparing the values of upstream infinity static pressure as well as the angle of sideslip values ($\beta_{ij}$, $\beta_{ik}$, $\beta_{jk}$),
   • identifying a possible fault with a probe by evaluating differences between the values of upstream infinity static pressure (from $Ps_{i\alpha ij}$ to $Ps_{k\alpha jk}$) as well as between the values of angle of sideslip ($\beta_{ij}$, $\beta_{ik}$, $\beta_{jk}$);

   the pressure coefficient $Kp_i$ of a probe being expressed as follows:

   $$Kp_i = (Ps_{loc\,i} - Ps)/(Pt - Ps),$$

   with $Ps_{loc\,i}$ which represents the local static pressure of the relevant probe,
   Ps which represents the upstream infinity static pressure,
   and Pt which represents the total pressure.

8. Process according to either of Claims 6 and 7, **characterized in that** a fault is detected on means for measuring local angle of attack ($\alpha_{loc\,i}$, $\alpha_{loc\,j}$, $\alpha_{loc\,k}$) when the angle of attack values ($\alpha_{ij}$, $\alpha_{ik}$, $\alpha_{jk}$) or the angle of sideslip values ($\beta_{ij}$, $\beta_{ik}$, $\beta_{jk}$) are not substantially equal.

9. Process according to one of the preceding claims, **characterized in that** at least one probe comprises means for measuring the total pressure ($Pt_i$, $Pt_j$, $Pt_k$).

10. Process according to any one of Claims 6 to 8, **characterized in that** a fault is identified on one of the means for measuring local angle of attack ($\alpha_{loc\,i}$, $\alpha_{loc\,j}$, $\alpha_{loc\,k}$) when the angle of attack values ($\alpha_{ij}$, $\alpha_{ik}$,

$\alpha_{jk}$) or the angle of sideslip values ($\beta_{ij}$, $\beta_{ik}$, $\beta_{jk}$) are not substantially equal, and **in that** the intercomparison of the values of upstream infinity static pressure (from $Ps_{i\alpha ij}$ to $Ps_{k\alpha jk}$; from $Ps_{i\beta ij}$ to $Ps_{k\beta jk}$) makes it possible to locate the defective probe.

11. Process according to any one of Claims 6 to 8 and according to Claim 9 in the guise of claim dependent on one of Claims 6 to 8, **characterized in that** a fault is identified on a probe's means for measuring the total pressure ($Pt_i$, $Pt_j$, $Pt_k$) when the measured values of total pressure are not substantially equal, and **in that** the defective means for measuring the total pressure ($P_T$) are located through a value of total pressure ($Pt_i$, $Pt_j$, $Pt_k$) substantially different from the others.

12. Process according to any one of Claims 6 to 8 and according to Claim 9 in the guise of claim dependent on one of Claims 6 to 8, **characterized in that** a fault is identified on the means for measuring the local static pressure ($Ps_{loc\,i}$, $Ps_{loc\,j}$, $Ps_{loc\,k}$) when the angle of attack values ($\alpha_{ij}$, $\alpha_{ik}$, $\alpha_{jk}$) are substantially equal, the angle of sideslip values ($\beta_{ij}$, $\beta_{ik}$, $\beta_{jk}$) are substantially equal, the values of the total pressure ($Pt_i$, $Pt_j$, $Pt_k$) are substantially equal, and when the values of the upstream infinity static pressure (from $Ps_{i\alpha ij}$ to $Ps_{k\alpha jk}$; from $Ps_{i\beta ij}$ to $Ps_{k\beta jk}$) are not substantially equal, and **in that** the defective means for measuring the local static pressure ($Ps_{loc\,i}$, $Ps_{loc\,j}$, $Ps_{loc\,k}$) are located by comparison of the values of upstream infinity static pressure (from $Ps_{i\alpha ij}$ to $Ps_{k\alpha jk}$; from $Ps_{i\beta ij}$ to $Ps_{k\beta jk}$).

FIG.1

EP 1 354 212 B1

FIG.2

|       | Sonde i | | Sonde j | | Sonde k | |
|-------|---------|---------|---------|---------|---------|---------|
| i-j | $Ps_{i\alpha ij}$ | $Ps_{i\beta ij}$ | $Ps_{j\alpha ij}$ | $Ps_{j\beta ij}$ | $Ps_{k\alpha ij}$ | $Ps_{k\beta ij}$ |
| i-k | $Ps_{i\alpha ik}$ | $Ps_{i\beta ik}$ | $Ps_{j\alpha ik}$ | $Ps_{j\beta ik}$ | $Ps_{k\alpha ik}$ | $Ps_{k\beta ik}$ |
| j-k | $Ps_{i\alpha jk}$ | $Ps_{i\beta jk}$ | $Ps_{j\alpha jk}$ | $Ps_{j\beta jk}$ | $Ps_{k\alpha jk}$ | $Ps_{k\beta jk}$ |

## FIG. 3